# EUROPEAN PATENT APPLICATION

(11) **EP 3 276 964 A1**
(43) Date of publication of application: **31.01.2018**
(21) Application number: 16771618.2
(22) Date of filing: 03.03.2016
(51) Int. Cl.: H04N 19/895, H04N 21/4425

(54) **VIDEO DECODING DEVICE**

(30) Priority: 27.03.2015 JP 2015067472; 17.12.2015 JP 2015246278
(71) Applicant: Panasonic Intellectual Property Management Co., Ltd., Osaka-shi, Osaka 540-6207 (JP)
(72) Inventor: OKADA, Toshihiro, Chuo-ku, Osaka-shi Osaka 540-6207 (JP); NISHIO, Toshiroh, Chuo-ku, Osaka-shi Osaka 540-6207 (JP); MATSUURA, Masanori, Chuo-ku, Osaka-shi Osaka 540-6207 (JP)
(74) Representative: Vigand, Philippe
(86) International application number: PCT/JP2016/001156
(87) International publication number: WO 2016/157724

(57) **Abstract**

Provided is a video decoding device capable of suppressing an error while decoding a stream. The video decoding device is a video decoding device that decodes a stream constituted by a data sequence including header information and compressed image data. The video decoding device includes a storage and a decoding processor. The storage holds the header information and the compressed image data in the stream. The decoding processor analyzes the header information and decodes the compressed image data. When the decoding processor determines that an error has occurred during decoding processing of the compressed image data based on an analysis result of the header information, the decoding processor analyzes information necessary for decoding compressed image data included in the compressed image data in a subsequent stream and decodes the compressed image data.

## Description

### TECHNICAL FIELD

The present disclosure relates to a video decoding device that decodes a stream obtained by encoding a video.

### BACKGROUND ART

In recent years, digital broadcasting has become prevalent in many countries in the world. Digital broadcasting has expanded not only to developed countries but also to emerging countries, and video apparatus that encode/decode videos have also become widespread in many countries. When image processing is performed in digital broadcasting, image processing is generally performed by an encoding device that encodes a captured video according to an internationally standardized method.

Patent Literature 1 discloses an image processing device that encodes or decodes images. The image processing device of Patent Literature 1 includes a control information adder. The control information adder embeds control information of one picture held in a control information holder in a slice header of a predetermined slice of encoded data held in an encoded data holder. The control information adder embeds the control information of one picture in a slice header of a slice to be transmitted first of a frame of the encoded data to be processed. The control information adder then outputs the encoded data with the control information added in predetermined order. This allows the image processing device to suppress reduction in encoding efficiency due to local control of filter processing during encoding processing or decoding processing.

### Citation List

### Patent Literature

PTL 1: Unexamined Japanese Patent Publication No. 2011-044781

### SUMMARY

A parameter of an encoding device on a transmission side may be set by mistake, or an encoded video may be transmitted with a setting value thereof being nonconforming to international standards due to a malfunction in software itself of the encoding device. In such a case, an error occurs during decoding processing of a compressed video in a receiver, and the video is not correctly reproduced.

The present disclosure provides a video decoding device capable of suppressing an error in decoding processing while decoding a stream obtained by encoding a video.

A video decoding device according to the present disclosure is a video decoding device that decodes a stream constituted by a data sequence including header information and compressed image data. The video decoding device includes a storage and a decoding processor. The storage holds the header information and the compressed image data in the stream. The decoding processor analyzes the header information and decodes the compressed image data. When the decoding processor determines that an error has occurred during decoding processing of the compressed image data based on an analysis result of the header information, the decoding processor analyzes information necessary for decoding compressed image data included in the compressed image data in a subsequent stream and decodes the compressed image data.

The video decoding device according to the present disclosure can suppress an error in decoding processing while decoding a stream obtained by encoding a video.

### BRIEF DESCRIPTION OF DRAWINGS

FIG. 1 is a block diagram schematically illustrating one example of a configuration of a video decoding device according to the first exemplary embodiment.
FIG. 2 is a diagram schematically illustrating data structure of a stream that is input into the video decoding device according to the first exemplary embodiment.
FIG. 3 is a flowchart illustrating one example of decoding processing to be performed by the video decoding device according to the first exemplary embodiment.
FIG. 4 is a block diagram schematically illustrating one example of the configuration of a video decoding device according to the second exemplary embodiment.
FIG. 5 is a flowchart illustrating one example of decoding processing to be performed by the video decoding device according to the second exemplary embodiment.
FIG. 6 is a flowchart illustrating one example of slice image decoding processing to be performed by the video decoding device according to the second exemplary embodiment.
FIG. 7 is a block diagram schematically illustrating one example of the configuration of a video decoding device according to the third exemplary embodiment.
FIG. 8 is a diagram schematically illustrating an error table to be stored in the video decoding device according to the third exemplary embodiment.
FIG. 9 is a flowchart illustrating one example of decoding processing to be performed by the video decoding device according to the third exemplary embodiment.

### DESCRIPTION OF EMBODIMENTS

Exemplary embodiments will be described in detail below with reference to the drawings as needed. However, a description more detailed than necessary may be omitted. For example, a detailed description of an already well-known matter and a reiterated description of substantially identical components may be omitted. This is intended to avoid the following description from becoming unnecessarily redundant and to make the description easier for a person skilled in the art to understand.

It is to be noted that the accompanying drawings and the following description are provided in order for a person skilled in the art to fully understand the present disclosure, and are not intended to limit the subject described in the appended claims.

In addition, each diagram is a schematic view and is not necessarily illustrated strictly. In addition, in each diagram, identical reference numerals are assigned to substantially identical components, and descriptions may be omitted or simplified.

### FIRST EXEMPLARY EMBODIMENT

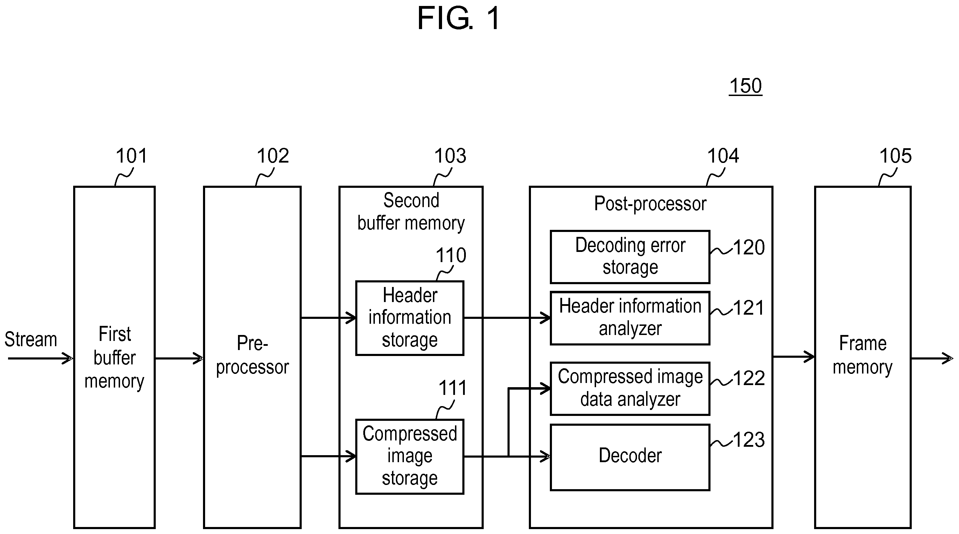

The first exemplary embodiment will be described with reference to FIG. 1 to FIG. 3.

### [1-1. Configuration]

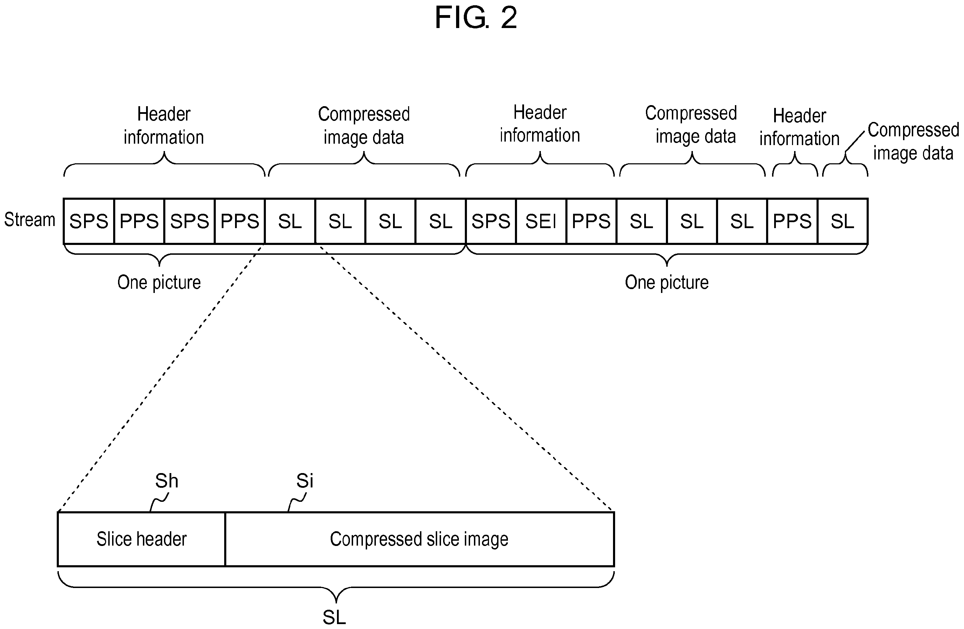

A configuration of video decoding device 150 according to the present exemplary embodiment will be described with reference to FIG. 1 and FIG. 2.
FIG. 1 is a block diagram schematically illustrating one example of the configuration of video decoding device 150 according to the first exemplary embodiment.
FIG. 2 is a diagram schematically illustrating data structure of a stream that is input into video decoding device 150 according to the first exemplary embodiment.

As illustrated in FIG. 1, the video decoding device includes first buffer memory 101, pre-processor 102, second buffer memory 103, post-processor 104, and frame memory 105. Note that in FIG. 1, among a plurality of components included in video decoding device 150, only components related to decoding processing of compressed image data are illustrated, and other components are omitted.

On reception of a stream (bit stream) including the compressed image data obtained by encoding a video, video decoding device 150 decodes the stream in two stages of pre-processing performed by pre-processor 102 and post-processing performed by post-processor 104. Note that in the present exemplary embodiment, decoding compressed image data included in a stream is also referred to as "decoding a stream." Data structure of a stream will be described with reference to FIG. 2.

FIG. 2 is a diagram illustrating one example of a stream. As an object to be decoded, the present exemplary embodiment assumes a stream obtained by encoding a video according to H.264/Moving Pictures Experts Group-4 (MPEG-4) Advanced Video Coding (AVC) (hereinafter referred to as "H. 264 standard"). The stream according to the H.264 standard is constituted by groups of data units (data sequence) called network abstraction layer (NAL) units. As illustrated in FIG. 2, types of NAL unit include a sequence parameter set (SPS) unit, a supplemental enhancement information (SEI) unit, a picture parameter set (PPS) unit, and a slice unit (SL). Among these units, the SPS unit, the SEI unit, and the PPS unit constitute header information. The slice unit SL constitutes the compressed image data.

FIG. 2 illustrates data structure of two pictures of a stream. In the preceding picture, the NAL units of the header information are gathered at a head, followed by the slice units SL. On the other hand, in the subsequent picture, one PPS unit is present between a plurality of slice units SL. In this way, according to the H.264 standard, the NAL unit constituting the header information is not necessarily at a head of the data sequence of one picture, but may be inserted into a midpoint of a sequence of the compressed image data.

Video decoding device 150 uses the header information indicated by the NAL unit that arrives before the specified slice unit SL to decode the compressed image data of the slice unit SL.

Returning to FIG. 1, the configuration of each part of video decoding device 150 will be described.

First buffer memory 101 is a buffer memory that temporarily stores (holds) the stream that is input into video decoding device 150. The stream stored in first buffer memory 101 undergoes encoding, for example, by context-based adaptive binary arithmetic coding (CABAC). In the stream, the header information and the compressed image data are mixed. Note that instead of CABAC, the stream that undergoes encoding by context-based adaptive variable length coding (CAVLC) may be input into first buffer memory 101.

First buffer memory 101, second buffer memory 103, and frame memory 105 are constituted by a storage device such as a flash memory, for example. First buffer memory 101, second buffer memory 103, and frame memory 105 may be configured as separate storage areas in one storage device, or may be configured as storage devices of different bodies.

Pre-processor 102 performs decoding processing such as, for example, context-adaptive binary arithmetic decoding (CABAD) on the stream stored in first buffer memory 101. In addition, pre-processor 102 distinguishes between the header information and the compressed image data included in the stream (the header information and the compressed image data that undergo decoding processing of CABAD), and then pre-processor 102 stores each piece of information in second buffer memory 103. Pre-processor 102 is one example of a distinguishing section that distinguishes between the header information and the compressed image data included in the stream. Pre-processor 102 and post-processor 104 are constituted, for example, by an identical central processing unit (CPU).

Second buffer memory 103 is a buffer memory that temporarily stores the stream that undergoes decoding processing of CABAD performed by pre-processor 102. Second buffer memory 103 includes header information storage 110 and compressed image storage 111. Second buffer memory 103 is one example of a storage that holds the header information and the compressed image data included in the stream.

Header information storage 110 temporarily stores the header information included in the stream in accordance with control from pre-processor 102.

Compressed image storage 111 temporarily stores the compressed image data included in the stream in accordance with control from pre-processor 102.

Post-processor 104 includes decoding error storage 120, header information analyzer 121, compressed image data analyzer 122, and decoder 123. Decoding error storage 120 is constituted by, for example, an internal memory of a CPU. Post-processor 104 is one example of a decoding processor that analyzes the header information and decodes the compressed image data.

Header information analyzer 121 analyzes the header information stored in header information storage 110, for example, on a picture-by-picture basis.

Specifically, header information analyzer 121 reads the header information corresponding to an amount of one picture from header information storage 110. Header information analyzer 121 then extracts, from the read header information, various parameters for decoding the compressed image data. Examples of the various parameters include "profile_idc", "entropy_coding_mode_flag", and "chroma_format_id." "profile_idc" is a parameter that represents a profile of the image data (compression encoding function used for compression). "entropy_coding_mode_flag" is a flag that represents an entropy coding mode (CAVLC or CABAC). "chroma_format_id" is a parameter that designates a color format.

Compressed image data analyzer 122 analyzes information necessary for decoding processing of the compressed image data included in the compressed image data stored in compressed image storage 111, for example, on a picture-by-picture basis.

The structure of the compressed image data will be described with reference to a lower-row diagram of FIG. 2.

The lower-row diagram of FIG. 2 is a diagram for describing the data structure of slice unit SL that constitutes the compressed image data. As illustrated in the diagram, within slice unit SL, there is slice header Sh at a head, followed by compressed slice image Si. Compressed slice image Si is image data compressed (encoded) on a slice-by-slice basis. Slice header Sh is data including various parameters necessary for decoding compressed slice image Si included in slice unit SL. Examples of the various parameters included in slice header Sh include "slice_type", and a part of the parameters agrees with the parameters included in the header information. "slice_type" is a parameter that designates a slice type of the compressed image data (such as I slice and P slice).

Then, compressed image data analyzer 122 illustrated in FIG. 1 reads each slice header Sh included in the compressed image data corresponding to an amount of one picture from compressed image storage 111. Compressed image data analyzer 122 then extracts various parameters necessary for decoding processing of compressed slice image Si from read slice header Sh.

Decoder 123 decodes the compressed image data stored in compressed image storage 111, for example, on a picture-by-picture basis. Specifically, decoder 123 performs processing such as inverse quantization processing, inverse orthogonal transformation processing, motion compensation, and filtering on the compressed image data of one picture read from compressed image storage 111, based on the various parameters extracted by header information analyzer 121 and the various parameters extracted by compressed image data analyzer 122. In this way, decoder 123 decodes image data of one picture. Decoder 123 outputs the image data (image data of one picture) decoded in this way to frame memory 105.

Decoding error storage 120 stores error information indicating whether an error has occurred or not when decoder 123 performs decoding processing on the compressed image data. Specifically, decoding error storage 120 stores an error bit (Errorjbit), which is a predetermined flag. A state where the error bit is "0" represents a state where the error information is not stored (that is, no error has occurred during past decoding processing of the compressed image data). A state where the error bit is "1" represents a state where the error information is stored (that is, an error has occurred during past decoding processing of the compressed image data). Post-processor 104 switches a method for decoding processing on the compressed image data based on the error information stored in decoding error storage 120. The method for switching decoding processing will be described later.

Frame memory 105 is a memory that temporarily stores the image data of one picture constituted by a plurality of slice images. Frame memory 105 outputs the image data of one picture at a predetermined frame rate (for example, 30 frames per second (fps)).

Note that while the foregoing description has described an example in which pre-processor 102 and post-processor 104 are constituted by an identical CPU, pre-processor 102 and post-processor 104 may be constituted by different bodies. For example, pre-processor 102 and post-processor 104 may each be constituted by decoder circuitry of a different body. In addition, pre-processor 102 and post-processor 104 may not be limited to a CPU, but may be hardware circuitry such as dedicated electronic circuitry designed to implement a predetermined function or reconfigurable electronic circuitry. Pre-processor 102 and post-processor 104 may be constituted by various semiconductor integrated circuits, such as a micro processing unit (MPU), a microcomputer, a digital signal processor (DSP), a field programmable gate array (FPGA), and an application specific integrated circuit (ASIC).

### [1-2. Operation]

### [1-2-1. Summary of operation]

A summary of an operation of video decoding device 150 according to the first exemplary embodiment will be described with reference to FIG. 1.

Video decoding device 150 decodes the stream in two stages of pre-processing and post-processing. First, the stream including the header information and the compressed image data is input into first buffer memory 101 as illustrated in FIG. 1. Pre-processor 102 performs decoding processing on the stream that undergoes variable length encoding, and then stores the decoded header information and compressed image data in second buffer memory 103.

Post-processor 104 operates based on the header information and the compressed image data stored in second buffer memory 103. In post-processor 104, to begin with, header information analyzer 121 analyzes the header information stored in header information storage 110 of second buffer memory 103 to extract various parameters. Then, based on the extracted various parameters, decoder 123 of post-processor 104 performs decoding processing on the compressed image data to output the decoded image data to frame memory 105.

Here, it is assumed that a parameter setting value included in the header information is wrong when decoder 123 performs decoding processing on the compressed image data. In this case, the parameter included in the header information and the parameter included in the compressed image data to be decoded do not agree with each other. This prevents decoder 123 from performing decoding processing normally.

Meanwhile, there is also a method for analyzing the parameter included in the header information and analyzing the parameter included in the compressed image data, and for performing decoding processing on the parameters that do not agree with each other as a result of these analyses, by using the parameter included in the compressed image data. When this method is performed, even if the parameter setting value included in the header information is wrong, decoding processing can be performed normally. However, it is necessary to always analyze the header information and the compressed image data, leading to a lower processing speed of decoding.

Therefore, video decoding device 150 according to the present exemplary embodiment switches the method for decoding processing between a normal stream in which the parameter included in the header information and the parameter included in the compressed image data agree with each other, and a stream in which both parameters do not agree with each other. This allows video decoding device 150 to perform decoding processing on the normal stream while suppressing reduction in the processing speed during decoding processing. Also, this allows video decoding device 150 to normally decode the stream in which the parameter included in the header information and the parameter included in the compressed image data differ from each other.

The method by which post-processor 104 switches decoding processing will be described below.

### [1-2-2. Method for switching decoding processing]

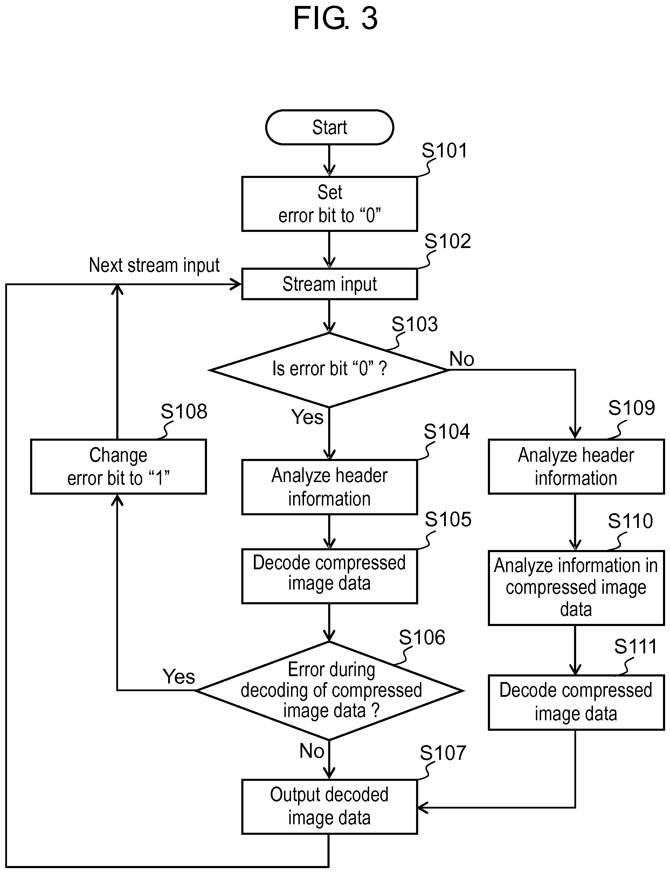

The method for switching decoding processing to be performed by video decoding device 150 will be described with reference to FIG. 3.

FIG. 3 is a flowchart illustrating one example of decoding processing to be performed by video decoding device 150 according to the first exemplary embodiment.

The flowchart illustrated in FIG. 3 indicates decoding processing to be performed by post-processor 104 based on various pieces of data read from second buffer memory 103 for each one picture. This flowchart starts, for example, when video decoding device 150 is turned on, when a new channel is selected in a television receiver or the like including video decoding device 150, or when one program ends and a next program starts.

In the flowchart of FIG. 3, to begin with, post-processor 104 resets an error bit representing the error information stored in decoding error storage 120, and sets Error_bit = "0" (step S101).

Error_bit = "0" indicates that no error has occurred during decoding processing of the compressed image data in the past stream.

Next, in response to input of the new stream, post-processor 104 reads the header information and the compressed image data of one picture from header information storage 110 and compressed image storage 111 of second buffer memory 103 (step S102).

Next, post-processor 104 reads the error bit stored in decoding error storage 120, and determines whether the error bit is "0" (Eerror_bit = "0") (step S103).

Processing of step S103 is performed in order to determine whether an error has occurred during decoding processing of the compressed image data in the preceding stream.

When it is determined in step S103 that the error bit is not "0" (that is, Error_bit = "1") (No in step S103), post-processor 104 advances processing to step S109. Processing after step S109 will be described later.

When it is determined in step S103 that the error bit is "0" (Error_bit = "0") (Yes in step S103), that is, when no error has occurred during past decoding processing, in post-processor 104, header information analyzer 121 analyzes the header information read from header information storage 110. Then, post-processor 104 extracts various parameters necessary for decoding processing of compressed slice image Si included in each slice unit SL of one picture (that is, the compressed image data of one picture) from the header information (step S104).

Next, in post-processor 104, based on the parameters extracted from the header information in step S104, decoder 123 performs decoding processing of the compressed image data of one picture read from compressed image storage 111 (step S105).

Next, with reference to a result of the decoding processing performed in step S105, post-processor 104 determines whether an error has occurred or not during decoding processing of the compressed image data based on the analysis result of the header information (step S106).

Note that the determination whether an error has occurred or not can be performed through application of a generally used error distinguishing method or error detection method, and thus detailed description thereof will be omitted.

When it is determined in step S106 that no error has occurred during decoding processing of the compressed image data based on the analysis result of the header information (No in step S106), post-processor 104 outputs the image data decoded in step S105 to frame memory 105 (step S107). Frame memory 105 stores the image data.

After step S107, post-processor 104 returns processing to step S102. This causes video decoding device 150 to be a state to wait for input of the stream of next one picture.

When it is determined in step S106 that an error has occurred during decoding processing of the compressed image data based on the analysis result of the header information (Yes in step S106), post-processor 104 stores the error information indicating that an error has occurred (Error_bit = "1") in decoding error storage 120 (step S108).

After step S108, post-processor 104 returns processing to step S102. This causes video decoding device 150 to be a state to wait for input of the stream of next one picture.

In step S103 to be performed after the error information (Error_bit = "1") is stored in decoding error storage 120 in step S108, post-processor 104 determines that the error bit is not "0" (No in step S103).

When it is determined in step S103 that the error bit is not "0" (that is, Error_bit = "1") (No in step S103), this indicates that an error has occurred during past decoding processing. In this case, in post-processor 104, header information analyzer 121 analyzes the header information of one picture read from header information storage 110 in step S102 (step S109).

In post-processor 104, header information analyzer 121 analyzes the header information to extract various parameters included in the header information.

Next, in post-processor 104, compressed image data analyzer 122 analyzes information necessary for decoding processing included in the compressed image data read from compressed image storage 111 in step S102 (step S110).

Specifically, compressed image data analyzer 122 extracts, from slice header Sh included in slice unit SL (refer to the lower-row diagram of FIG. 2), the parameter necessary for decoding processing of compressed slice image Si.

Next, in post-processor 104, decoder 123 performs decoding processing on the compressed image data based on the parameter extracted from the header information in step S109 and the parameter extracted from the compressed image data in step S110 (step S111).

In decoding processing to be performed in step S111, post-processor 104 uses the analysis result of compressed image data analyzer 122 in step S110 with priority over the analysis result of header information analyzer 121 in step S109. Alternatively, post-processor 104 performs decoding processing by using the analysis result of compressed image data analyzer 122 in step S110. Accordingly, even if the header information includes a mistake, decoding processing is performed based on the information included in the compressed image data, and thus post-processor 104 can decode the compressed image data correctly.

Next, post-processor 104 outputs the image data decoded in step S111 to frame memory 105 (step S107). Frame memory 105 stores the image data. After step S107, post-processor 104 returns processing to step S102.

According to the above processing, in an early stage (that is, while the error bit is "0"), in post-processor 104, decoder 123 performs decoding processing on the compressed image data based on the various parameters extracted by header information analyzer 121 (step S104, step S105). This allows video decoding device 150 to perform decoding processing on the compressed image data while suppressing reduction in the processing speed.

When an error has occurred during decoding processing of the compressed image data based on the analysis result of header information analyzer 121 (Yes in step S106), the error information (Error_bit = "1") is stored in decoding error storage 120 (step S108). After this processing is performed, decoder 123 performs decoding processing on the compressed image data based on the parameter extracted by each of header information analyzer 121 and compressed image data analyzer 122 (or, based on the parameter extracted by compressed image data analyzer 122). This allows video decoding device 150 to suppress continuous occurrence of the error that has occurred during decoding processing of the compressed image data, and to decode the compressed image data correctly.

### [1-3. Effects, etc.]

As described above, the video decoding device according to the present exemplary embodiment is a video decoding device that decodes the stream constituted by the data sequence including the header information and the compressed image data. The video decoding device includes the storage and the decoding processor. The storage holds the header information and the compressed image data in the stream. The decoding processor analyzes the header information and decodes the compressed image data. When the decoding processor determines that an error has occurred during decoding processing of the compressed image data based on the analysis result of the header information, the decoding processor analyzes the information necessary for decoding compressed image data included in the compressed image data in a subsequent stream and decodes the compressed image data.

Note that video decoding device 150 is one example of the video decoding device. Second buffer memory 103 is one example of the storage. Post-processor 104 is one example of the decoding processor.

For example, in the example described in the first exemplary embodiment, video decoding device 150 decodes the stream constituted by the data sequence including the header information and the compressed image data. Video decoding device 150 includes second buffer memory 103 and post-processor 104. Second buffer memory 103 holds the header information and the compressed image data in the stream. Post-processor 104 analyzes the header information and decodes the compressed image data. Post-processor 104 determines whether an error has occurred during decoding processing of the compressed image data based on the analysis result of the header information. When post-processor 104 determines that an error has occurred during decoding processing of the compressed image data based on the analysis result of the header information, post-processor 104 analyzes the information necessary for decoding compressed image data included in the compressed image data in a subsequent stream and decodes the compressed image data.

In video decoding device 150 configured as described above, post-processor 104 determines whether an error has occurred during decoding processing of the compressed image data based on the analysis result of the header information. Then, when post-processor 104 determines that an error has occurred during decoding processing of the compressed image data based on the analysis result of the header information, post-processor 104 analyzes the information necessary for decoding the compressed image data included in the compressed image data in the subsequent stream and performs decoding processing of the compressed image data based on the analysis result. This allows video decoding device 150 to suppress an error of decoding processing while decoding the stream obtained by encoding a video.

In addition, when post-processor 104 determines that no error has occurred during decoding processing of the compressed image data based on the analysis result of the header information, post-processor 104 analyzes the header information that is outside of the compressed image data in the subsequent stream, and performs decoding processing of the compressed image data based on the analysis result.

Accordingly, as long as no error occurs during decoding processing of the stream, video decoding device 150 continues decoding processing of the compressed image data based on the analysis result of the header information that is outside of the compressed image data.

When the decoding processor determines that the error has occurred during the decoding processing of the compressed image data, the decoding processor may use an analysis result of the information included in the compressed image data with priority over the analysis result of the header information to decode the compressed image data.

For example, in the example described in the first exemplary embodiment, when post-processor 104 determines that the error has occurred during the decoding processing of the compressed image data, post-processor 104 uses an analysis result of the information included in the compressed image data (for example, slice header Sh) with priority over the analysis result of the header information to decode the compressed image data.

This allows video decoding device 150 to decode the compressed image data by using the parameter included in the compressed image data even when the parameter included in the header information and the parameter included in the compressed image data within the stream do not agree with each other.

When the decoding processor determines that no error has occurred during the decoding processing of the compressed image data, the decoding processor may decode the compressed image data based on the analysis result of the header information.

For example, in the example described in the first exemplary embodiment, when post-processor 104 determines that no error has occurred during the decoding processing of the compressed image data, post-processor 104 decodes the compressed image data based on the analysis result of the header information, without analyzing the information included in the compressed image data.

This allows video decoding device 150 to suppress reduction in the processing speed during decoding processing. This is because the parameter included in the compressed image data is not analyzed in a case of the normal stream in which the parameter value included in the header information and the parameter value included in the compressed image data within the stream agree with each other.

Note that out of the information included in the compressed image data, post-processor 104 may not analyze information that agrees with the header information, and may analyze information that does not agree with the header information to extract the parameter.

When the decoding processor determines that the error has occurred during the decoding processing of the compressed image data, the decoding processor may analyze the information necessary for decoding compressed image data included in the compressed image data for each piece of the compressed image data in a subsequent stream to extract the parameter.

For example, in the example described in the first exemplary embodiment, when post-processor 104 determines that the error has occurred during the decoding processing of the compressed image data, post-processor 104 analyzes the information necessary for decoding compressed image data included in the compressed image data for each piece of the compressed image data in a subsequent stream (for example, information included in slice header Sh) to extract the parameter.

This allows video decoding device 150, when an error has occurred during decoding processing of the compressed image data, to suppress subsequent recurrence of the error.

The video decoding device may include a decoding error storage that stores information indicating whether the error has occurred during the decoding processing of the compressed image data based on the header information. Based on the information stored in the decoding error storage, the decoding processor may determine whether the error has occurred during decoding processing of the compressed image data.

Note that decoding error storage 120 is one example of the decoding error storage. The error bit is one example of the information indicating whether an error has occurred during decoding processing of the compressed image data.

For example, in the example described in the first exemplary embodiment, post-processor 104 includes decoding error storage 120 that stores information (error bit) indicating whether the error has occurred during the decoding processing of the compressed image data based on the header information. Based on the information (error bit) stored in decoding error storage 120, post-processor 104 determines whether the error has occurred during decoding processing of the compressed image data.

Accordingly, when a wrong stream is input in which the parameter value included in the header information and the parameter value included in the compressed image data within the stream differ from each other and an error has occurred during decoding processing of the compressed image data based on the analysis result of the header information, video decoding device 150 detects and stores occurrence of the error. Then, from the subsequent stream, video decoding device 150 performs decoding processing on the compressed image data based on the analysis result of the parameter included in the header information and the analysis result of the parameter included in the compressed image data. Accordingly, even when a wrong stream is input, video decoding device 150 can perform decoding processing normally.

In the video decoding device, the information necessary for decoding the compressed image data may include a parameter that designates at least one of a slice type of the compressed image data, a type of entropy encoding of the compressed image data, a profile of the compressed image data, and a color format of the compressed image data.

For example, in the example described in the first exemplary embodiment, in video decoding device 150, the information necessary for decoding the compressed image data includes various parameters that are set to decode the compressed image data for each piece of the compressed image data. Examples of the various parameters include a parameter that designates at least one of a slice type of the compressed image data (slice_type), a type of entropy encoding of the compressed image data (entropy_coding_mode_flag), a profile of the compressed image data (profile_idc), and a color format of the compressed image data (chroma_format_id).

### SECOND EXEMPLARY EMBODIMENT

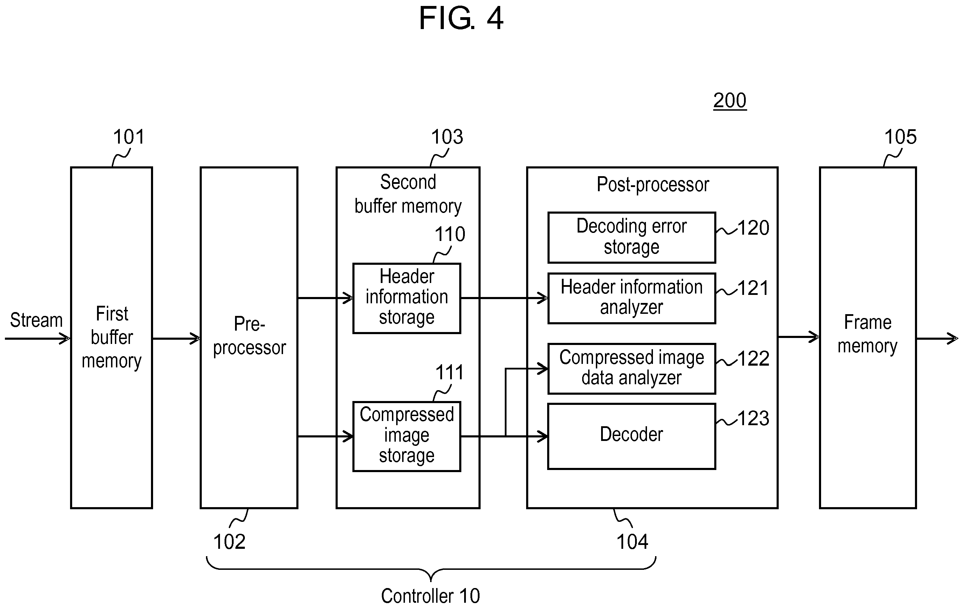

The second exemplary embodiment will be described with reference to FIG. 4 to FIG. 6.

The first exemplary embodiment has described a method by which post-processor 104 of video decoding device 150 switches decoding processing on a picture-by-picture basis based on an error that has occurred during decoding processing. The second exemplary embodiment will describe a method for switching decoding processing on a slice-by-slice basis.

### [2-1. Configuration]

Video decoding device 200 according to the second exemplary embodiment will be described below.

Note that in video decoding device 200 to be described in the second exemplary embodiment, regarding components that perform operations substantially identical to operations of components included in video decoding device 150 described in the first exemplary embodiment, identical reference marks are assigned to these components, and description thereof will be omitted. The following description will focus on points different from video decoding device 150 described in the first exemplary embodiment, and the description about the operations substantially identical to the operations of video decoding device 150 described in the first exemplary embodiment may be omitted.

FIG. 4 is a block diagram schematically illustrating one example of a configuration of video decoding device 200 according to the second exemplary embodiment.

As illustrated in FIG. 4, video decoding device 200 according to the second exemplary embodiment includes the configuration substantially identical to the configuration of video decoding device 150 described in the first exemplary embodiment. However, in video decoding device 200, pre-processor 102 and post-processor 104 constitute, for example, controller 10 that controls overall operations of video decoding device 200. Note that FIG. 4 illustrates only components related to decoding processing of compressed image data among a plurality of components included in video decoding device 200, and other components are omitted.

Controller 10 is constituted by a CPU, for example. Controller 10 is one example of a decoding processor including post-processor 104.

### [2-2. Operation]

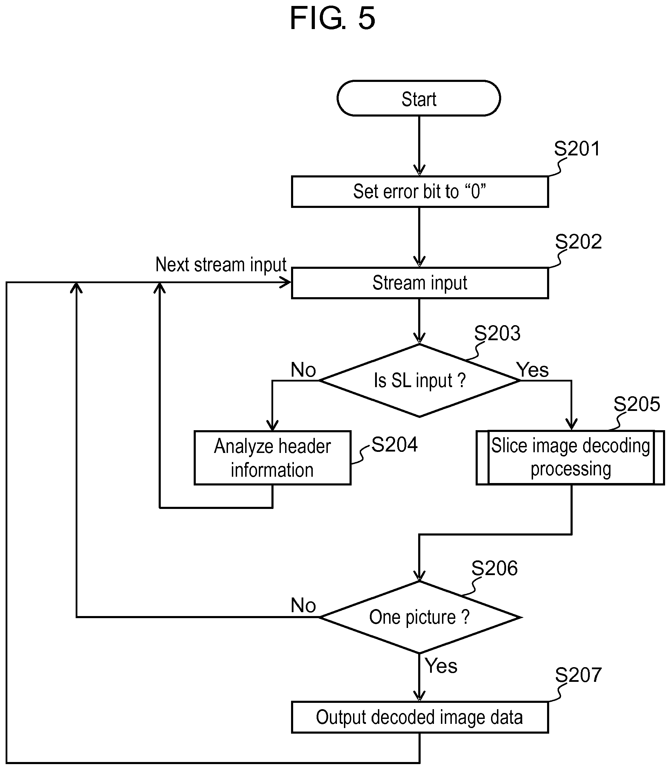

The operation of video decoding device 200 will be described below with reference to FIG. 5.

FIG. 5 is a flowchart illustrating one example of decoding processing to be performed by video decoding device 200 according to the second exemplary embodiment.

The flowchart illustrated in FIG. 5 indicates decoding processing that controller 10 performs on every predetermined data unit (NAL unit). This flowchart starts, for example, when video decoding device 200 is turned on, when a new channel is selected in a television receiver or the like including video decoding device 200, or when one program ends and a next program starts.

In the flowchart of FIG. 5, to begin with, controller 10 operates as post-processor 104, and resets an error bit stored in decoding error storage 120. Accordingly, Error_bit = "0" is set (step S201).

Next, controller 10 operates as pre-processor 102, and reads information of one NAL unit from first buffer memory 101 in response to input of a new stream (step S202).

Next, controller 10 operates as pre-processor 102, and performs decoding processing such as CABAD, and the like. Then, controller 10 determines whether the input NAL unit is slice unit SL (step S203).

When it is determined in step S203 that the input NAL unit is not slice unit SL (No in step S203), this means that header information is input into controller 10. In this case, controller 10 operates as pre-processor 102, and stores the NAL unit in header information storage 110 of second buffer memory 103. Then, controller 10 operates as header information analyzer 121 of post-processor 104, and analyzes the header information stored in header information storage 110 (step S204).

Meanwhile, when it is determined in step S203 that the input NAL unit is slice unit SL (Yes in step S203), controller 10 operates as post-processor 104, and performs slice image decoding processing (step S205).

The slice image decoding processing is decoding processing for decoding compressed slice image Si of one slice unit SL and for storing the decoded slice image in frame memory 105. Details of the slice image decoding processing will be described later.

Next, controller 10 operates as post-processor 104, and determines whether one or more slice images stored in frame memory 105 have reached an amount of one picture (step S206).

When controller 10 determines in step S206 that the slice images stored in frame memory 105 have not reached an amount of one picture (No in step S206), controller 10 returns processing to step S202.

When controller 10 determines in step S206 that the slice images stored in frame memory 105 have reached an amount of one picture (Yes in step S206), controller 10 reads image data of one picture from frame memory 105, and outputs the read image data (step S207).

Controller 10 repeats processing from step S201 to step S207 at predetermined intervals (for example, 30 fps).

By the above processing, video decoding device 200 analyzes the input stream on a NAL unit-by-NAL unit basis as required. Decoding processing of compressed slice image Si (step S205) is performed based on an analysis result of the header information (step S204) performed during a time period until slice unit SL is input (until it is determined Yes in step S203).

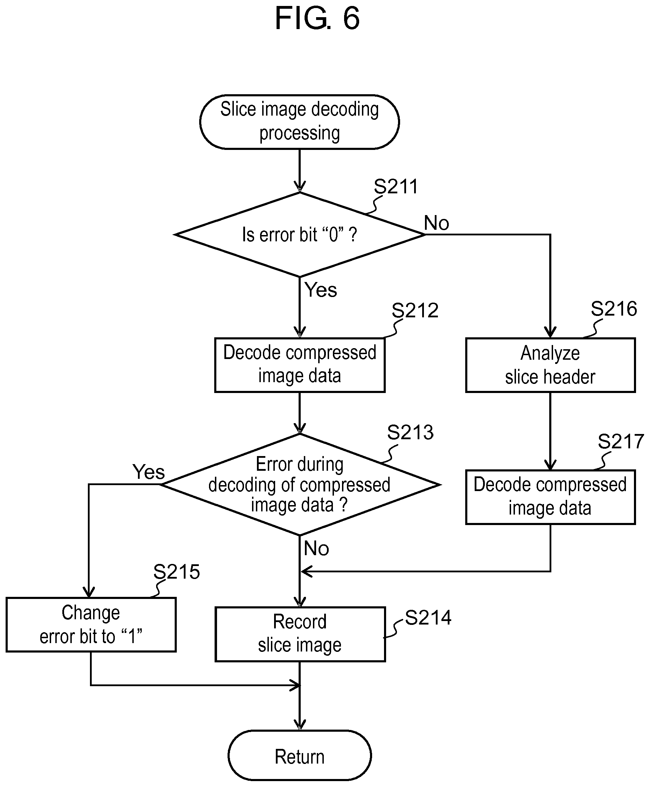

Next, slice image decoding processing to be performed in step S205 of the flowchart illustrated in FIG. 5 will be described with reference to FIG. 6.

FIG. 6 is a flowchart illustrating one example of slice image decoding processing to be performed by video decoding device 200 according to the second exemplary embodiment.

Note that in the flowchart illustrated in FIG. 6, controller 10 operates as post-processor 104.

To begin with, controller 10 reads the error bit stored in decoding error storage 120, and determines whether the error bit is "0" (Error_bit = "0") (step S211).

When it is determined in step S211 that the error bit is "0" (Error_bit = "0") (Yes in step S211), this indicates that no error has occurred during past decoding processing. In this case, controller 10 operates as decoder 123, and based on the analysis result of the header information (step S204 of FIG. 5), controller 10 decodes compressed slice image Si included in one slice unit SL (step S212).

Next, with reference to a result of decoding processing performed in step 212, controller 10 determines whether an error has occurred during decoding processing of compressed slice image Si performed based on the analysis result of the header information (step S213).

Note that the determination whether an error has occurred or not can be performed through application of a generally used error distinguishing method or error detection method, and thus detailed description thereof will be omitted.

When it is determined in step S213 that no error has occurred during decoding processing of compressed slice image Si performed based on the analysis result of the header information (No in step S213), controller 10 outputs the slice image decoded in step S212 to frame memory 105 (step S214). Frame memory 105 stores the slice image.

After step S214, controller 10 advances processing to step S206 of FIG. 5.

When it is determined in step S213 that an error has occurred during decoding processing of compressed slice image Si performed based on the analysis result of the header information (Yes in step S213), controller 10 stores, in decoding error storage 120, error information (Error_bit = "1") indicating that an error has occurred (step S215).

After step S215, controller 10 advances processing to step S206 of FIG. 5.

When it is determined in step S211 that the error bit is not "0" (that is, Error_bit = "1") (No in step S211), this indicates that an error has occurred during past decoding processing. In this case, controller 10 analyzes information necessary for decoding processing included in slice header Sh of slice unit SL (step S216).

Specifically, controller 10 extracts a parameter necessary for decoding processing of compressed slice image Si from slice header Sh included in slice unit SL (refer to the lower-row diagram of FIG. 2). Then, controller 10 uses the extracted parameter for decoding processing of compressed slice image Si. Accordingly, even if the header information includes a mistake, decoding processing is performed based on the analysis result of slice header Sh, and thus controller 10 can decode compressed slice image Si correctly.

Controller 10 performs decoding processing of compressed slice image Si based on the parameter extracted by processing of step S216 (step S217).

After step S217, controller 10 advances processing to step S214. Controller 10 outputs the slice image decoded in step S217 to frame memory 105 (step S214). Frame memory 105 stores the slice image.

### [2-3. Advantageous effects, etc.]

As described above, in the present exemplary embodiment, video decoding device 200 performs the above-described processing. Accordingly, when an error occurs during decoding processing of compressed slice image Si based on the analysis result of the header information, video decoding device 200 switches the method for decoding processing during decoding processing of next compressed slice image Si. Then, video decoding device 200 performs decoding processing based on the analysis result of the header information and the analysis result of slice header Sh. Thus, video decoding device 200 can switch decoding processing on a slice-by-slice basis.

### THIRD EXEMPLARY EMBODIMENT

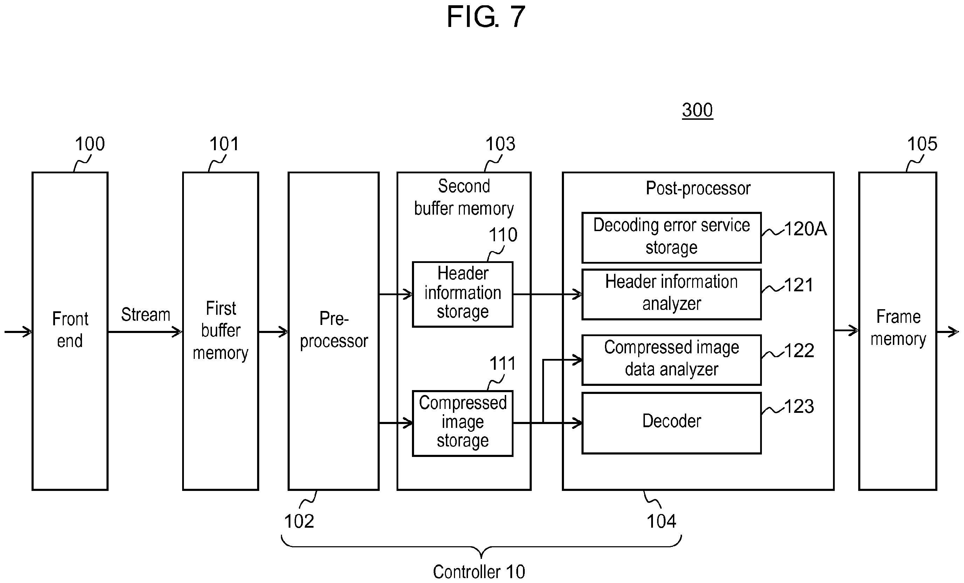

The third exemplary embodiment will be described with reference to FIG. 7 to FIG. 9.

The first and second exemplary embodiments have described configuration examples in which video decoding devices 150, 200 switch a method for decoding processing based on information (error bit) indicating whether an error has occurred during decoding processing of compressed image data. The third exemplary embodiment will describe a configuration example in which video decoding device 300 stores a service in which an error has occurred during decoding processing of the compressed image data, and switches the method for decoding processing for each service.

Note that the service refers to, for example, content such as a program supplied from a broadcasting station via broadcast waves, or a channel.

### [3-1. Configuration]

Video decoding device 300 according to the third exemplary embodiment will be described below.

Note that in video decoding device 300 to be described in the third exemplary embodiment, regarding components that perform operations substantially identical to operations of components included in video decoding devices 150, 200 described in the first and second exemplary embodiments, identical reference marks are assigned to these components, and description thereof will be omitted. The following description will focus on points different from video decoding devices 150, 200 described in the first and second exemplary embodiments, and the description about the operations substantially identical to the operations of video decoding devices 150, 200 described in the first and second exemplary embodiments may be omitted.

FIG. 7 is a block diagram schematically illustrating one example of a configuration of video decoding device 300 according to the third exemplary embodiment.

As illustrated in FIG. 7, video decoding device 300 according to the third exemplary embodiment includes the configuration substantially identical to the configurations of video decoding devices 150, 200 described in the first and second exemplary embodiments. However, in addition to these configurations, video decoding device 300 further includes front end 100. Note that FIG. 7 illustrates only components related to decoding processing of the compressed image data among a plurality of components included in video decoding device 300, and other components are omitted.

Front end 100 is configured to include, for example, a tuner circuit and a demodulator circuit (not illustrated). Front end 100 selects a service desired by a user (designated by a user) in a received broadcast wave signal transmitted from outside. Then, front end 100 demodulates a stream corresponding to the selected service, and outputs the stream to first buffer memory 101.

In addition, instead of decoding error storage 120 included in video decoding devices 150, 200 described in the first and second exemplary embodiments (refer to FIG. 1, FIG. 4), video decoding device 300 includes decoding error service storage 120A.

Decoding error service storage 120A stores an error table. The error table stores information indicating the service in which an error has occurred while decoder 123 performs decoding processing on the compressed image data.

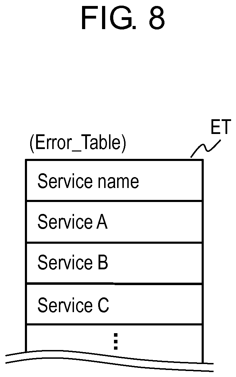

Error table ET will be described with reference to FIG. 8.

FIG. 8 is a diagram schematically illustrating error table ET to be stored in video decoding device 300 according to the third exemplary embodiment.

As illustrate in FIG. 8, "service name" is recorded in error table ET. "Service name" is a name indicating the service such as, for example, a program name and a channel name. When an error occurs in the service in which decoder 123 performs decoding, the service name of the service is recorded in error table ET. Note that information to be recorded in error table ET is not limited to the service name. For example, any information may be recorded in error table ET as long as the information allows specification of the service such as an identification number of the service (hereinafter referred to as service information).

Based on error table ET stored in decoding error service storage 120A, controller 10 illustrated in FIG. 7 determines whether the stream of the newly selected service is a service that causes an error during decoding processing or not. Controller 10 then switches the method for decoding processing.

### [3-2. Operation]

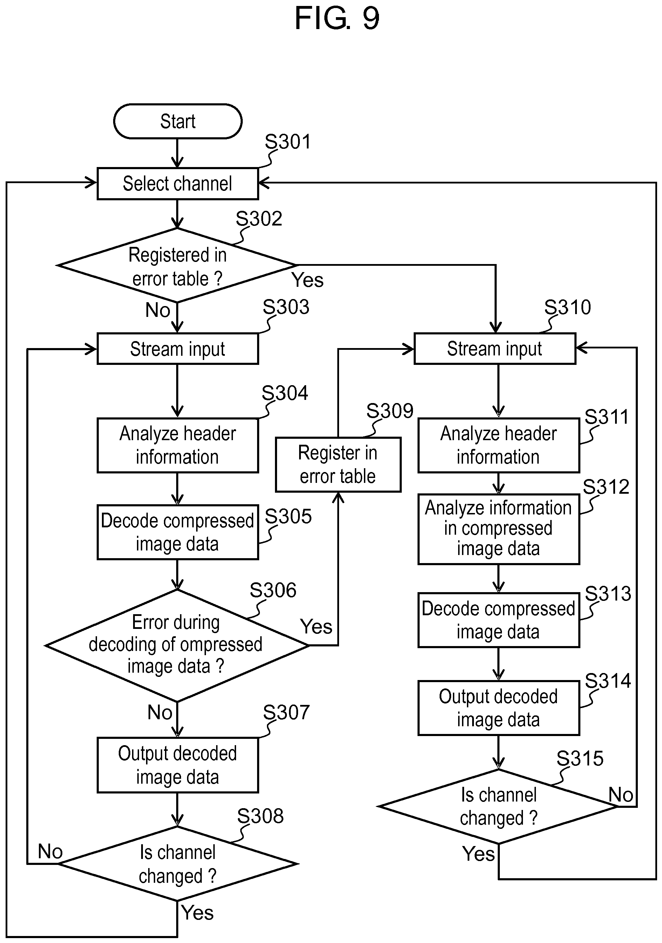

The operation of video decoding device 300 will be described below with reference to FIG. 9.

FIG. 9 is a flowchart illustrating one example of decoding processing to be performed by video decoding device 300 according to the third exemplary embodiment.

The flowchart illustrated in FIG. 9 indicates decoding processing to be performed by controller 10 for each picture based on various pieces of data read from second buffer memory 103. This flowchart starts, for example, when video decoding device 300 is turned on.

In the flowchart of FIG. 9, to begin with, controller 10 operates as pre-processor 102, and receives selection of a service made by a user via front end 100 (step S301).

Next, controller 10 operates as post-processor 104, and with reference to error table ET stored in decoding error service storage 120A, controller 10 determines whether the selected service has been registered in error table ET (step S302).

Processing of step S302 is performed in order to determine whether the service selected by the user is a service in which an error has occurred during past decoding processing.

When it is determined in step S302 that the service selected by the user has not been registered in error table ET (No in step S302), this indicates that no error has occurred during past decoding processing in the selected service. In this case, controller 10 advances processing to step S303.

Processing of each step of step S303, step S304, step S305, step S306, and step S307 is substantially identical to processing of each step of step S102, step S104, step S105, step S106, and step S107 illustrated in FIG. 3, and thus detailed description thereof will be omitted.

Controller 10 operates as post-processor 104. In a similar manner to processing of step S104, step S105 illustrated in FIG. 3, controller 10 performs each step of step S304, step S305 in response to input of a new stream (step S303), analyzes the header information, and decodes the compressed image data (step S304, step S305).

When it is determined in step S306 that no error has occurred during decoding processing of the compressed image data based on the analysis result of the header information (No in step S306), controller 10 as post-processor 104 outputs the image data decoded in step S305 to frame memory 105 (step S307). Frame memory 105 stores the image data.

Next, controller 10 operates as pre-processor 102, and determines whether the channel (service) has been changed by the user (step S308).

When controller 10 determines in step S308 that the channel has not been changed (No in step S308), controller 10 returns processing to step S303 and repeats processing from step S303 to step S308.

When controller 10 determines in step S308 that the channel has been changed (Yes in step S308), controller 10 returns processing to step S301 and performs processing after step S301.

When it is determined in step S306 that an error has occurred during decoding processing of the compressed image data based on the analysis result of the header information (Yes in step S306), controller 10 advances processing to step S309.

Controller 10 operates as post-processor 104, and registers, in error table ET stored in decoding error service storage 120A, service information indicating the service in which an error has occurred during decoding processing (step S309).

After step S309, controller 10 advances processing to step S310.

Processing of each step of step S310, step S311, step S312, step S313, and step S314 is substantially identical to processing of each step of step S102, step S109, step S110, step S111, and step S107 illustrated in FIG. 3, and thus detailed description thereof will be omitted.

From the next stream, in a similar manner to processing of step S109, step S110, and step S111 illustrated in FIG. 3, controller 10 as post-processor 104 performs each step of step S311, step S312, and step S313, analyzes the header information and the information included in the compressed image data, and decodes the compressed image data (step S311 to step S313).

Controller 10 as post-processor 104 outputs the image data decoded in step S313 to frame memory 105 (step S314). Frame memory 105 stores the image data.

When it is determined in step S302 that the service newly selected by the user has been registered in error table ET in decoding error service storage 120A (Yes in step S302), this indicates that an error has occurred during past decoding processing in the selected service. In this case, controller 10 advances processing to step S310. Accordingly, controller 10 as post-processor 104 performs processing after step 310, and performs decoding processing of the compressed image on the newly selected service based on the analysis result of the header information and the analysis result of the information included in the compressed image data (from step S310 to step S314).

Next, controller 10 operates as pre-processor 102, and determines whether the channel (service) has been changed by the user (step S315).

When controller 10 determines in step S315 that the channel has not been changed (No in step S315), controller 10 returns processing to step S310 and repeats processing from step S310 to step S315.

When controller 10 determines in step S315 that the channel has been changed (Yes in step S315), controller 10 returns processing to step S301 and performs processing after step S301.

In video decoding device 300 that performs the above processing, the information (service name) on the service in which an error has occurred during decoding processing is registered in error table ET (step S309). Therefore, when the user selects the service, video decoding device 300 can perform a comparison to determine whether or not the service name of the service selected by the user and the service name registered in error table ET agree with each other. This allows video decoding device 300 to determine whether a normal stream is input in which the header information and the information included in the compressed image data agree with each other, and whether a false stream is input in which the header information and the information included in the compressed image data do not agree with each other (step S302).

In addition, when the normal stream is input, video decoding device 300 performs decoding processing by using the parameter based on the header information (step S303 to step S308). This allows video decoding device 300 to perform decoding processing while suppressing reduction in the processing speed. Meanwhile, when the invalid stream is input, video decoding device 300 performs decoding processing by using the parameter based on the header information and the information included in the compressed image data (step S310 to step S315). Therefore, even if the invalid stream is input, video decoding device 300 can suppress occurrence of an error during decoding processing, and can perform decoding processing correctly.

### [3-3. Advantageous effects, etc.]

As described above, the video decoding device according to the present exemplary embodiment includes the front end and the decoding error service storage. Front end 100 selects the service. The decoding error service storage stores the information indicating the service in which an error has occurred during decoding processing of the compressed image data based on the header information.

Note that video decoding device 300 is one example of the video decoding device. Front end 100 is one example of the front end. Decoding error service storage 120A is one example of the decoding error service storage.

For example, in the example described in the third exemplary embodiment, video decoding device 300 includes front end 100 and decoding error service storage 120A. Front end 100 selects the service. Decoding error service storage 120A stores the information indicating the service in which an error has occurred during decoding processing of the compressed image data based on the header information.

In video decoding device 300 configured as described above, the service in which an error has occurred during decoding processing of the stream is stored in decoding error service storage 120A. Accordingly, when the service to be selected next is the service stored in decoding error service storage 120A, from a time when decoding the stream that is first received in the service, video decoding device 300 performs decoding processing of the compressed image data based on the analysis result of the header information and the analysis result of the information included in the compressed image data. Therefore, when receiving the service selected by the user, even if a wrong stream is input, video decoding device 300 can perform decoding processing normally.

### OTHER EXEMPLARY EMBODIMENTS

As described above, the first to third exemplary embodiments have been described as illustration of the technology to be disclosed in this application. However, the technology in the present disclosure is not limited to these embodiments, but also applicable to exemplary embodiments to which changes, replacements, additions, omissions, etc. are made. It is also possible to make a new exemplary embodiment by combining components described in the aforementioned exemplary embodiments.

Therefore, other exemplary embodiments will be illustrated below.

The third exemplary embodiment has described an example in which, when switching the method for decoding processing on each service, the video decoding device performs an operation of switching the method for decoding processing on a picture-by-picture basis. However, the video decoding device according to the third exemplary embodiment is not limited to this operation example. For example, in a similar manner to the second exemplary embodiment, the video decoding device according to the third exemplary embodiment may perform the operation of switching the method for decoding processing on each service on a slice-by-slice basis.

The first to third exemplary embodiments have described operation examples in which, when an error occurs once during decoding processing of the compressed image data, the video decoding device switches the method for decoding processing. However, the present disclosure is not limited to these operation examples. For example, when a predetermined number of errors occur during decoding processing of the compressed image data, the video decoding device may perform the operation of switching the method for decoding processing.

The first to third exemplary embodiments have described a case where the stream to be decoded conforms to the H.264 standard; however, the stream to be decoded may conform to the standard such as, for example, H.265, MPEG-4 or MPEG-2.

The first to third exemplary embodiments have described configuration examples in which, in the video decoding device, decoding error storage 120 or decoding error service storage 120A are provided within post-processor 104. However, decoding error storage 120 or decoding error service storage 120A may be provided outside of post-processor 104. For example, decoding error storage 120 or decoding error service storage 120A may be provided within first buffer memory 101 or second buffer memory 103, and may be constituted by another memory device provided within the video decoding device.

The first to third exemplary embodiments have described configuration examples in which the video decoding device includes either one of decoding error storage 120 and decoding error service storage 120A. However, the video decoding device may include both decoding error storage 120 and decoding error service storage 120A. In addition, in the video decoding device, decoding error storage 120 and decoding error service storage 120A may be integrally formed.

As described above, the exemplary embodiments have been described as illustration of the technology in the present disclosure. For this purpose, the accompanying drawings and detailed description have been provided.

Accordingly, the components described in the accompanying drawings and detailed description may include not only components essential for solving problems but also components unessential for solving problems, in order to illustrate the technology. Therefore, it should not be acknowledged immediately that those unessential components be essential because those unessential components are described in the accompanying drawings and detailed description.

Also, since the aforementioned exemplary embodiments are intended to illustrate the technology in the present disclosure, various changes, replacements, additions, omissions, and the like may be made within the scope of the appended claims or equivalents thereof.

### INDUSTRIAL APPLICABILITY

The present disclosure is applicable to video decoding devices and video apparatus. Specifically, the present disclosure is applicable to devices such as a digital television, video recording and reproducing device, video camera, television camera, digital broadcasting tuner, DVD player, DVD recorder, and cellular phone.

### REFERENCE MARKS IN THE DRAWINGS

10: controller
100: front end
101: first buffer memory
102: pre-processor
103: second buffer memory
104: post-processor
105: frame memory
110: header information storage
111: compressed image storage
120: decoding error storage
121: header information analyzer
122: compressed image data analyzer
123: decoder
120A: decoding error service storage
150, 200, 300: video decoding device

## Claims

1. A video decoding device for decoding a stream configured by a data sequence including header information and compressed image data, the video decoding device comprising:
a storage that holds the header information and the compressed image data in the stream; and
a decoding processor that analyzes the header information and decodes the compressed image data,
wherein when the decoding processor determines that an error has occurred during decoding processing of the compressed image data based on an analysis result of the header information, the decoding processor analyzes information necessary for decoding compressed image data included in the compressed image data in a subsequent stream and decodes the compressed image data.

2. The video decoding device according to claim 1, wherein when the decoding processor determines that the error has occurred during the decoding processing of the compressed image data, the decoding processor uses an analysis result of the information included in the compressed image data with priority over the analysis result of the header information to decode the compressed image data.

3. The video decoding device according to claim 1, wherein when the decoding processor determines that the error has occurred during the decoding processing of the compressed image data, the decoding processor analyzes the information necessary for decoding compressed image data included in the compressed image data for each piece of the compressed image data in a subsequent stream.

4. The video decoding device according to claim 1, wherein the information necessary for decoding the compressed image data includes a parameter that designates at least one of a slice type of the compressed image data, a type of entropy encoding of the compressed image data, a profile of the compressed image data, and a color format of the compressed image data.

5. The video decoding device according to claim 1, wherein when the decoding processor determines that no error has occurred during the decoding processing of the compressed image data, the decoding processor decodes the compressed image data based on the analysis result of the header information.

6. The video decoding device according to claim 1, further comprising a decoding error storage that stores information indicating whether the error has occurred during the decoding processing of the compressed image data based on the header information,
wherein based on the information stored in the decoding error storage, the decoding processor determines whether the error has occurred during decoding processing of the compressed image data.

7. The video decoding device according to claim 1, further comprising:
a front end that selects a service; and
a decoding error service storage that stores information indicating a service in which an error has occurred during the decoding processing of the compressed image data based on the header information.
